# EUROPEAN PATENT SPECIFICATION

(11) **EP 1 995 467 B1**
(45) Date of publication and mention of the grant of the patent: **07.05.2014**
(21) Application number: 07738343.8
(22) Date of filing: 13.03.2007
(51) Int. Cl.: F04D 29/34, F01D 5/30, F02K 3/06, F01D 5/32, F04D 29/32

(54) **HOLDING STRUCTURE OF FAN BLADE**
HALTESTRUKTUR EINER VENTILATORSCHAUFEL
STRUCTURE SUPPORT POUR PALE DE VENTILATEUR

(30) Priority: 13.03.2006 JP 2006067620
(43) Date of publication of application: 26.11.2008
(73) Proprietor: IHI Corporation, Tokyo 135-8710 (JP)
(72) Inventor: OKA, Takashi, Koto-ku, Tokyo 1358710 (JP)
(74) Representative: Grünecker, Kinkeldey, Stockmair & Schwanhäusser
(86) International application number: PCT/JP2007/054871
(87) International publication number: WO 2007/105701

(56) References cited:
- EP-A1- 1 223 309
- EP-A2- 1 096 107
- FR-A1- 2 888 897
- GB-A- 2 286 431
- JP-A- 11 036 802
- JP-A- 58 187 503
- JP-A- 2001 182 502
- JP-A- 2001 234 890
- JP-U- 62 047 703

## Description

### Technical Field

The present invention relates to a fan blade retaining structure for preventing a fan blade from coming off from a disk even when an axial forward load acts on the fan blade upon breaking the fan blade. A fan blade retaining structure according to the preamble of claim 1 is known from GB 2 286 431 A.

### Background Art

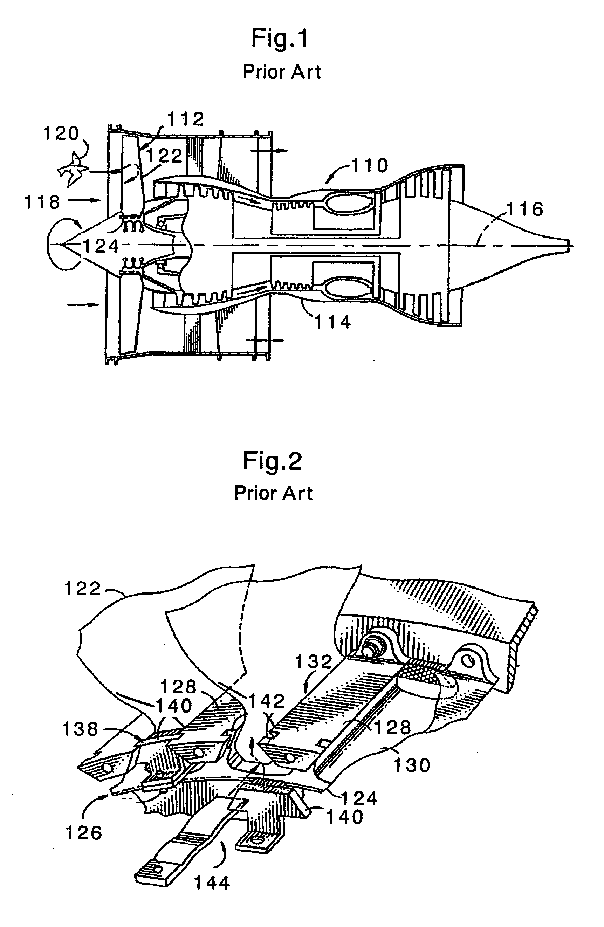

Fig. 1 is a schematic view illustrating a turbofan engine 110 for an airplane. The engine 110 includes a fan assembly 112 which is coaxially disposed with respect to a center shaft 116 and is driven by a core engine 114. During the operation of the engine 110, external air 118 is sucked by the fan assembly 112 so as to produce a thrust for enabling an airplane to fly.

When the airplane having the above-described engine 110 takes off or lands, for example, a comparatively large bird 120 may be sucked into the fan assembly 112. In this case, the bird 120 impacts on fan blades 122 extending outward from a rotor disk 124 in a radial direction, so that a part of the fan blades 122 is broken and scattered. Additionally, alien materials except for the bird may be sucked into the fan assembly to thereby damage components. In addition to the supposition, the fan blades 122 or a part thereof may be broken and scattered due to a large load or the like. Hereinafter, such a phenomenon will be referred to as FBO (Fan Blade Off).

In the event of the FBO, a part of the fan blades 122 may be scattered to collide against the adjacent other fan blades 122, so that an axial forward (upstream) shock power acts on the fan blades 122.

Since the axial forward shock power acting on the fan blades 122 acts in a direction in which the fan blades 122 come off from the rotor disk 124, the fan assembly 112 needs to be provided with a structure capable of retaining the fan blades 122 in the rotor disk 124 even when the axial forward shock power acts on the fan blades 122.

Patent Document 1 has already proposed a fan blade retainer for satisfying the above-described requirements.

Patent Document 1 discloses a retainer assembly 126 for retaining the fan blades 122 in the rotor disk 124. As shown in Fig. 2, the retainer assembly 126 includes the rotor disk 124, a first blade retainer 138, and a second blade retainer 144.

The rotor disk 124 includes a plurality of dovetail posts 128 which are spaced at a predetermined angular interval in a circumferential direction, and a dovetail groove 130 is formed therebetween. Each fan blade 122 includes a dovetail 132 fitted to the dovetail groove 130 in an axial direction, and the dovetail 132 is immovably retained in a radial direction by the dovetail post 128. With the above-described configuration, a centrifugal force produced during rotation of the fan blades 122 is transmitted to the rotor disk 124 via the dovetail post 128.

The first blade retainer 138 is provided so as to prevent the fan blade 122 from moving in an axial forward direction (upstream direction). The first blade retainer 138 includes a fixed plate 140 fixed to the rotor disk 124 so as to immovably retain the fan blade 122 in the dovetail groove 130 in an axial direction. The fixed plate 140 is inserted in an outward radial direction into a pair of grooves 142 formed in the adjacent dovetail posts 128.

The second blade retainer 144 is provided so as to prevent the axial movement of the fan blades 122 by serving as a chock after the fan blades 122 move by a predetermined distance in a case where the axial movement of the fan blades 122 cannot be prevented by the first blade retainer 138. With the above-described configuration, both the first blade retainer 138 and the second blade retainer 144 disperse the axial forward shock energy acting on the fan blades 122 so that each fan blade 122 is retained in the dovetail grooves 130.

### [Patent Document 1]

US Patent No. 5,282,720 'Fan blade retainer'

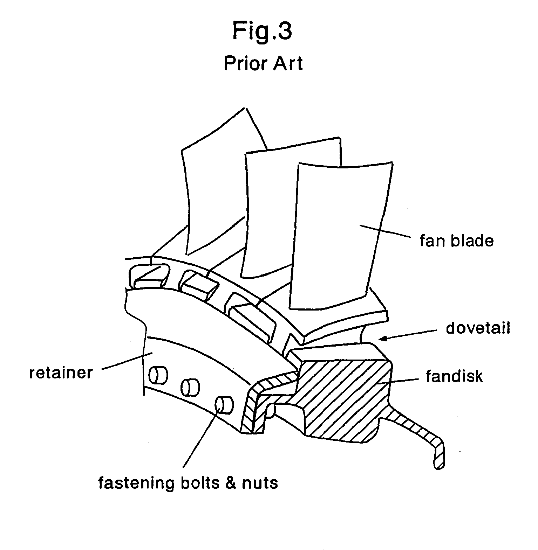

Fig. 3 is a schematic view illustrating a dovetail structure according to a conventional art. As shown in the drawing, it is necessary to attach the fan blades of the turbofan engine to a peripheral portion of a circular disk (called a fan disk or a spinner) rotationally driven by a turbine. For this reason, in the past, there was adopted a conventional dovetail structure in which a dovetail part is formed in a root portion of the fan blade so as to extend in a longitudinal direction and the dovetail part is fitted to a dovetail groove formed in the periphery of a disk.

In addition, in order to prevent the fan blade from coming off from the dovetail groove due to the axial forward power, in the past, a member called a retainer was fastened to a front portion of the blade by fastening bolts, nuts, and the like.

Examples of the retainer include a circular-ring type for functioning with respect to a plurality of blades and a plate type for functioning with respect to each of the blades.

However, in case of the circular-ring type retainer, since a gap between an action portion of a load and a fastening portion such as a bolt and a nut is long, a problem arises in that the stress acting on the bolt due to the load is difficult to be estimated and the retainer is difficult to be designed. Meanwhile, in case of the plate type retainer, since the retainer is mounted to each blade, a problem arises in that operability is poor. For this reason, in both cases of the circular-ring type retainer and the plate type retainer, a problem arises in that a decrease in weight is difficult to be achieved and a cost is high.

In addition, in case of the retainer assembly described in Patent Document 1, although both the first blade retainer 138 and the second blade retainer 144 can disperse the axial forward shock energy acting on the fan blades 122 so that each fan blade 122 is retained in the dovetail groove 130, a problem arises in that the structure is complex and a manufacturing cost is high.

In the retainer assembly, since it is necessary to provide a plurality of first blade retainers 138 and the second blade retainers 144, a problem arises in that the operability during an assembling operation is poor.

### Disclosure of the Invention

### Problems to be Solved by the Invention

The present invention is contrived in consideration of the above-described problems. That is, an object of the invention is to provide a fan blade retaining structure capable of surely preventing a fan blade from coming off from a disk even when an axial forward load acts on the fan blade upon breaking the fan blade, of being easily designed with high estimation precision of stress, and of enabling a fastening bolt to be lighter in weight, smaller in size, and fewer in number than a conventional fastening bolt, thereby reducing the number of components. Accordingly, it is possible to provide the fan blade retaining structure capable of realizing a decrease in weight and cost.

According to the invention, there is provided a fan blade retaining structure in which a plurality of fan blades is configured to be attached to an outer periphery of a disk rotationally driven by a turbine, wherein the disk includes a plurality of dovetail grooves configured to be spaced at a predetermined angular interval in a circumferential direction and to extend in an axial direction, wherein each of the fan blades includes a dovetail part configured to be fitted to each of the dovetail grooves in an axial direction and capable of transmitting a centrifugal force produced during rotation to the disk, wherein the disk further includes a flange part configured to be positioned in front of the dovetail grooves and to extend outward in a radial direction, and wherein the fan blade retaining structure further includes a ring-shape retainer member configured to be fitted between a front surface of the dovetail part and a rear surface of the flange part so as to transmit an axial forward load acting on the fan blade to the disk via the rear surface of the flange part.

According to the invention, the flange part of the disk includes disk tooth parts configured to be spaced at a predetermined angular interval in a circumferential direction and to project outward in a radial direction.

The retainer member includes a ring part configured to have a rear surface coming into contact with the front surface of the dovetail part and retainer tooth parts configured to be formed inside the ring part so as to be spaced at a predetermined angular interval in a circumferential direction and to project inward in a radial direction.

Each of the retainer tooth parts is capable of passing between the adjacent disk tooth parts in an axial direction and comes close to the rear surface of the disk tooth part to overlap therewith at the same position in a circumferential direction.

The fan blade retaining structure further preferably includes a fastener configured to fix the retainer tooth part to the disk tooth part in a state where the retainer tooth part comes close to the disk tooth part to overlap with each other.

The disk tooth part is formed at the same position as that of the dovetail groove in a circumferential direction.

According to the configuration of the invention, since the retainer member is provided so as to be fitted between the front surface of the dovetail part and the rear surface of the flange part, even when the axial forward load acts on the fan blades upon breaking the fan blades, it is possible to transmit the axial forward load from the front surface of the dovetail part to the disk via the rear surface of the flange part and the retainer member.

Since a stress occurring in the retainer member by the axial forward load mainly corresponds to an axial compressive stress and a stress occurring in the flange part by the axial forward load mainly corresponds to an axial stretching stress, it is possible to accurately estimate an internal stress occurring in the retainer member and the flange part in accordance with the axial forward load.

Since the retainer member and the flange part are prevented from being broken by setting the internal stress to a sufficiently small stress, it is possible to surely prevent the fan blade from coming off from the disk.

Since the ring-shape retainer member is used, it is possible to reduce the number of components.

Since the axial forward load does not act on the fastener (bolt, nut, and the like) for fastening the retainer member to the flange part by transmitting the axial forward load to the retainer member and the flange part, it is possible to more reduce the weight, the size, and the number of the fastening bolt than a conventional fastening bolt, and thus to reduce the number of components. Accordingly, it is possible to realize a decrease in weight and cost.

In addition, the flange part includes the disk tooth parts which project outward in a radial direction and the retainer member includes the ring part which comes into contact with the front surfaces of the dovetail parts and the retainer tooth parts which project inward in a radial direction. Also, each of the retainer tooth parts can pass between the adjacent disk tooth parts in an axial direction and is disposed adjacent to each rear surface of the disk tooth parts.

Accordingly, the retainer member can be easily fitted between the front surface of the dovetail parts and the rear surface of the flange part in such a manner that the retainer tooth parts of the retainer member pass between the adjacent disk tooth parts in an axial direction and are rotated up to the same positions in a circumferential direction so as to be adjacent to the rear surfaces of the disk tooth part.

Since the axial forward load does not act on the fastener by fixing the retainer tooth parts to the disk tooth parts at the same positions in a circumferential direction by using the fastener (bolt, nut, and the like), it is possible to more reduce the weight, the size, and the number of the fastener than the conventional fastener, and thus to reduce the number of components.

### Brief Description of the Drawings

Fig. 1 is a schematic view illustrating a turbofan engine for an airplane.
Fig. 2 is a configuration view illustrating a fan blade retainer disclosed in Patent Document 1.
Fig. 3 is a schematic view illustrating a dovetail structure according to a conventional art.
Fig. 4 is an overall perspective view illustrating a state where a fan blade retaining structure, not in accordance with the present invention but provided so as to enable a greater understanding thereof, is disassembled.
Fig. 5A is a transverse sectional view illustrating an engine provided with the fan blade retaining structure, not in accordance with the present invention but provided so as to enable a greater understanding thereof.
Fig. 5B is an enlarged view illustrating a B part shown in Fig. 5A.
Fig. 6A is a view taken along the line C-C shown in Fig. 5B in a state where a retainer member is being mounted.
Fig. 6B is a view taken along the line C-C shown in Fig. 5B in a state where the retainer member is completely mounted.

### Best Mode for Carrying out the Invention

Hereinafter, a fan blade retaining structure not in accordance with the present invention but provided so as to enable a greater understanding thereof will be described in detail with reference to the accompanying drawings. In addition, in the respective drawings, the same reference numerals are given to the same components and the repetitive description thereof will be omitted.

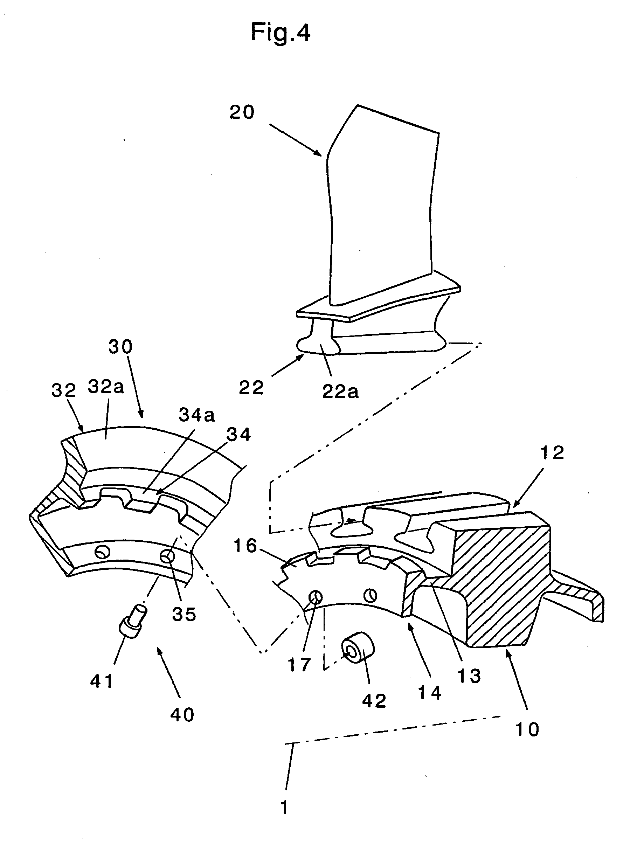

Fig. 4 is an overall perspective view illustrating a state where a fan blade retaining structure, not in accordance with the present invention but provided so as to enable a greater understanding thereof, is disassembled. The fan blade retaining structure is configured such that a plurality of fan blades 20 are attached to the outer periphery of a disk 10 which is rotationally driven by a turbine (not shown).

As shown in the drawing, the fan blade retaining structure includes the disk 10, the fan blades 20, a retainer member 30, and a fastener 40.

The disk 10 includes a plurality of dovetail grooves 12 which are spaced at a predetermined angular interval in a circumferential direction and extends in an axial direction. Although it is desirable that the number of the dovetail grooves 12 is the same as that of the fan blades 20, a plurality (two or more) of fan blades 20 may be attached to one dovetail groove 12.

In this example, the dovetail grooves 12 are parallel to a shaft center 1 of a rotary shaft, but may be inclined with respect to the shaft center 1. In addition, each of the dovetail grooves 12 may be formed into a linear shape or a circular arc shape so long as each of the fan blades 20 is inserted and fitted in an axial direction from the front side.

The fan blade 20 includes a dovetail part 22 which is formed in the inner end in a radial direction so as to be fitted to the dovetail groove 12. The dovetail part 22 is configured to be fitted to the dovetail groove 12 in an axial direction from the front side and to transmit a centrifugal force acting on the fan blade 20 produced during rotation to the disk 10.

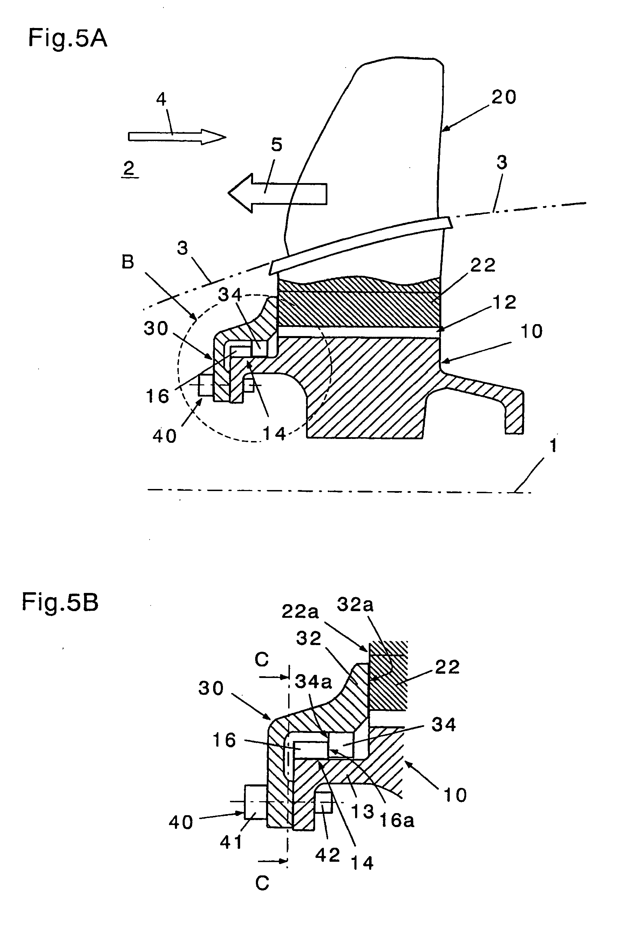

Fig. 5A is a transverse sectional view illustrating a fan part of an engine provided with the fan blade retaining structure, in which only the upper side of the shaft center 1 of the rotary shaft is shown. Fig. 5B is an enlarged view illustrating a B part shown in Fig. 5A.

In addition, in the drawing, Reference numeral 1 denotes the shaft center of the rotary shaft of the disk 10 and the fan blade 20, Reference numeral 2 denotes an air flow passage, Reference numeral 3 denotes the inner peripheral surface of the air flow passage, Reference numeral 4 denotes an intake air flow, and Reference numeral 5 denotes an axial forward power acting on the fan blade 20 in the event of FBO.

As shown in Figs. 4, 5A, and 5B, the disk 10 further includes a flange part 14 which is positioned in front of the dovetail groove 12 and extends in a radial outer direction. The flange part 14 is integrally connected to a hollow cylindrical part 13 which extends forward from the inner end of the disk 10.

The flange part 14 further includes disk tooth parts 16 which are spaced at a predetermined angular interval in a circumferential direction and project outward in a radial direction.

The retainer member 30 includes a hollow disk-shape ring part 32 and retainer tooth parts 34 which are integrally formed with the inner portion of the ring part 32.

The ring part 32 includes a rear surface 32a, and the rear surface 32a comes into contact with a front surface 22a of the dovetail part 22 inserted into the dovetail groove 12.

In addition, the retainer tooth parts 34 are spaced at a predetermined angular interval in a circumferential direction and project inward in a radial direction.

As shown in Fig. 4, in this example, the disk tooth parts 16 are formed at centers in a circumferential direction of the dovetail grooves 12 which are adjacent to each other in a circumferential direction and are not positioned on extension lines of the dovetail grooves 12. Accordingly, in this example, the retainer tooth parts 34 are formed in a circumferential direction so as to have the same pitches as those of the dovetail grooves 12 and have the same number as that of the dovetail grooves 12.

With the above-described configuration, the disk tooth parts 16 can be formed at the radial positions so as to have the substantially same heights as those of the dovetail parts 22, and the forward axial load produced from the dovetail parts 22 can be surely supported by two disk tooth parts 16 in a circumferential direction.

In contrast, in the embodiment of the invention, the disk tooth parts are formed at the same positions as those of the dovetail grooves in a circumferential direction.

In this case, although the disk tooth parts 16 need to be formed at the radial positions lower than the bottom portions of the dovetail parts 22 so as not to be positioned on the extension lines of the dovetail grooves 12, the axial forward load produced from the dovetail parts 22 can be surely supported by the disk tooth parts 16 disposed at the same positions in a circumferential direction.

In addition, the number of the disk tooth parts 16 and the retainer tooth parts 34 needs not to be the same as that of the dovetail grooves 12, but the number may be two or more (for example, four, eight, sixteen or the like) so long as a balance is ensured during a high-speed rotation.

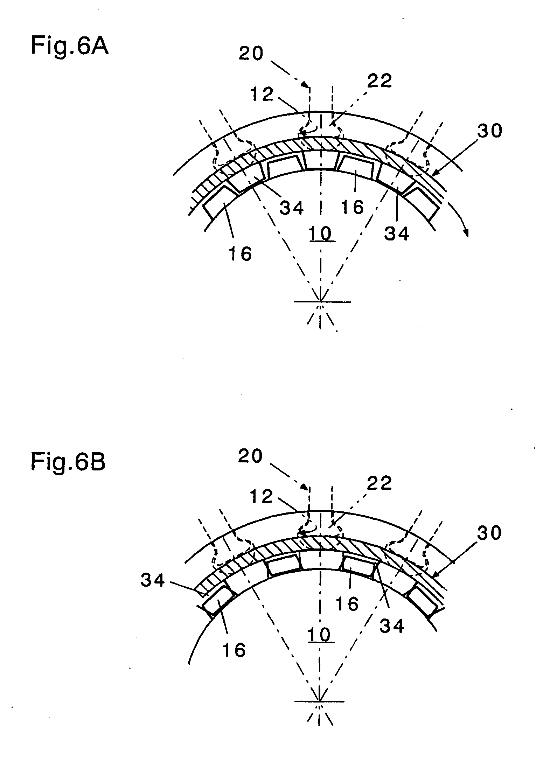

Fig. 6A is a view taken along the line C-C shown in Fig. 5B in a state where the retainer member is being mounted. Fig. 6B is a view taken along the line C-C shown in Fig. 5B in a state where the retainer member is completely mounted.

In Figs. 4 to 6A and 6B, an axial distance (thickness) from the rear surface 32a of the retainer member 30 to each front surface 34a of the retainer tooth parts 34 is set to be a smaller value than an axial distance from the front surface 22a of the dovetail part 22 to each rear surface 16a of the disk tooth parts 16 in a mounting state. It is desirable that the gap is set so that the retainer member 30 smoothly rotates about the shaft center 1 in a state where the retainer member is mounted.

As shown in Fig. 6A, each of the retainer tooth parts 34 can pass between the adjacent disk tooth parts 16 in an axial direction. In addition, as shown in Fig. 6B, the retainer tooth parts come close to the rear surfaces of the disk tooth parts 16 to overlap therewith at the same positions in a circumferential direction by rotating the retainer member 30 about the shaft center 1 by a predetermined angle (in this example, 30 degree or so). It is desirable that the close gap therebetween is set to be small so long as the retainer tooth parts do not interfere with the disk tooth parts within an operation temperature range of the engine.

In Figs. 4, 5A, and 5B, the fastener 40 includes a bolt 41 and a nut 42 which are screw-connected to each other while passing through a through hole 35 formed in the retainer member 30 and a through hole 17 formed in the flange part 14 of the disk 10 so as to fix the retainer tooth parts 34 and the disk tooth parts 16 at the same positions in a circumferential direction.

In addition, in this example, the flange part 14 extends inward in a radial direction, and the through hole 17 is formed in the extending portion. An inverse L-shape portion is formed in the retainer member 30 so as to come into contact with the extending portion, and the through hole 35 is formed in the inverse L-shape portion.

However, the invention is not limited to this configuration, but may be configured such that the retainer member 30 is formed into, for example, a ring-shape flat plate instead of the inverse L-shape portion and the ring-shape flat plate is directly fixed to the disk 10.

With the above-described configuration, the retainer tooth parts 34 and the disk tooth parts 16 are fixed at the same positions in a circumferential direction during the time when the ring-shape retainer member 30 shown in Fig. 6B is completely mounted and the engine is operated.

In addition, the retainer member 30 can transmit the axial forward load acting on the fan blade 20 to the disk 10 via the rear surfaces 16a of the disk tooth parts 16 while being fitted between the front surfaces 22a of the dovetail parts 22 and the rear surfaces 16a of the disk tooth parts 16.

With the above-described configuration, since there is provided the retainer member 30 fitted between the front surfaces 22a of the dovetail parts 22 and the rear surfaces 16a of the flange part 14 (the disk tooth parts 16), even when the axial forward load occurs acts on the fan blade upon breaking the fan blade 20, the axial forward load can be transmitted from the front surfaces 22a of the dovetail parts 22 to the disk 10 via the retainer member 30 and the rear surfaces 16a of the flange part.

Since a stress occurring in the retainer member 30 by the axial forward load mainly corresponds to an axial compressive stress and a stress occurring in the flange part 14 by the axial forward load mainly corresponds to an axial stretching stress, it is possible to accurately estimate an internal stress occurring in the retainer member 30 and the flange part 14 in accordance with the axial forward load.

Since the retainer member 30 and the flange part 14 are prevented from being broken by setting the internal stress to a sufficiently small stress, it is possible to surely prevent the fan blade 20 from coming off from the disk 10.

Since the ring-shape retainer member 30 is used, it is possible to reduce the number of components.

Since the axial forward load does not act on the fastener 40 (bolt, nut, and the like) for fastening the retainer member 30 to the flange part 14 by transmitting the axial forward load to the retainer member 30 and the flange part 14, it is possible to more reduce the weight, the size, and the number of the fastener 40 than a conventional fastener, and thus to reduce the number of components.

In addition, the flange part 14 of the disk 10 includes the disk tooth parts 16 which project outward in a radial direction and the retainer member 30 includes the ring part 32 which comes into contact with the front surfaces 22a of the dovetail parts 22 and the retainer tooth parts 34 which project inward in a radial direction. Also, each of the retainer tooth parts 34 can pass between the adjacent disk tooth parts 16 in an axial direction and is disposed adjacent to each rear surface 16a of the disk tooth parts 16. Accordingly, the retainer member 30 can be easily fitted between the font surface 22a and the rear surface 16a of the flange part in such a manner that the retainer tooth parts 34 of the retainer member 30 pass between the adjacent disk tooth parts 16 in an axial direction and are rotated up to the same positions in a circumferential direction so as to be adjacent to the rear surfaces of the disk tooth part 16.

Since the axial forward load does not act on the fastener 40 by fixing the retainer tooth parts 34 to the disk tooth parts 16 at the same positions in a circumferential direction by using the fastener 40 (bolt, nut, and the like), it is possible to more reduce the weight, the size, and the number of the fastener than the conventional fastener, and thus to reduce the number of components.

## Claims

1. A fan blade retaining structure in which a plurality of fan blades (20) is configured to be attached to an outer periphery of a disk (10) rotationally driven by a turbine,
wherein the disk (10) includes a plurality of dovetail grooves (12) configured to be spaced at a predetermined angular interval in a circumferential direction and to extend in an axial direction,
wherein each of the fan blades(20) includes a dovetail part (22) configured to be fitted to each of the dovetail grooves (12) in an axial direction and capable of transmitting a centrifugal force produced during rotation to the disk (10),
wherein the disk (10) includes a flange part (14) configured to be positioned in front of the dovetail grooves (12) and to extend outward in a radial direction,
wherein the fan blade retaining structure further comprises a ring-shape retainer member (30) configured to be fitted between a front surface (22a) of the dovetail part (22) and a rear surface (16a) of the flange part (14) so as to transmit an axial forward load acting on the fan blade to the disk (10) via the rear surface (16a) of the flange part (14),
wherein the flange part (14) of the disk (10) includes disk tooth parts (16) configured to be spaced at a predetermined angular interval in a circumferential direction and to project outward in a radial direction,
wherein the retainer member (30) includes a ring part (32) configured to have a rear surface (16a) coming into contact with the front surface (22a) of the dovetail part (22) and retainer tooth parts (34) configured to be formed inside the ring part (32) so as to be spaced at a predetermined angular interval in a circumferential direction and to project inward in a radial direction, and
wherein each of the retainer tooth parts (34) is capable of passing between the adjacent disk tooth parts (16) in an axial direction and comes close to the rear surface (16a) of the disk tooth part (16) to overlap therewith at the same position in a circumferential direction
**characterized in that**
the disk tooth part (16) is formed at the same position as that of the dovetail groove in (12) a circumferential direction.

2. The fan blade retaining structure according to Claim 1, further comprising:
a fastener (40) configured to fix the retainer tooth part to the disk tooth part (16) in a state where the retainer tooth part (34) comes close to the disk tooth part (16) to overlap with each other.

## Patentansprüche

1. Gebläseflügel-Haltestruktur, bei der eine Vielzahl von Gebläseflügeln (20) so eingerichtet sind, dass sie an einem Außenumfang einer Scheibe (10) angebracht sind, die von einer Turbine rotierend angetrieben wird,
wobei die Scheibe (10) eine Vielzahl von Schwalbenschwanznuten (12) enthält, die so eingerichtet sind, dass sie in einem vorgegebenen Winkelintervall in einer Umfangsrichtung beabstandet sind und sich in einer axialen Richtung erstrecken,
wobei jeder der Gebläseflügel (20) einen Schwalbenschanzteil (22) enthält, der so eingerichtet ist, dass er in einer axialen Richtung in jede der Schwalbenschwanznuten (12) eingesetzt ist und in der Lage ist, eine bei Drehung der Scheibe (10) erzeugte Zentrifugalkraft zu übertragen,
wobei die Scheibe (10) einen Flanschteil (14) enthält, der so eingerichtet ist, dass er vor den Schwalbenschwanznuten (12) positioniert ist und sich in einer radialen Richtung nach außen erstreckt,
wobei die Gebläseflügel-Haltestruktur des Weiteren ein ringförmiges Halterelement (30) umfasst, das so eingerichtet ist, dass es zwischen eine vordere Fläche (22a) des Schwalbenschwanzteils (22) und eine hintere Fläche (16a) des Flanschteils (14) so eingesetzt wird, dass es eine nach vorn gerichtete axiale Last, die auf den Gebläseflügel wirkt, über die hintere Fläche (16a) des Flanschteils (14) auf die Scheibe (10) überträgt,
der Flanschteil (14) der Scheibe (10) Scheiben-Zahnteile (16) enthält, die so eingerichtet sind, dass sie in einem vorgegebenen Winkelintervall in einer Umfangsrichtung beabstandet sind und in einer radialen Richtung nach außen vorstehen,
wobei das Halterelement (30) einen Ringteil (32), der so eingerichtet ist, dass er eine hintere Fläche (16a) hat, die in Kontakt mit der vorderen Fläche (22a) des Schwalbenschwanzteils (22) kommt, und Halter-Zahnteile (34) enthält, die so eingerichtet sind, dass sie im Inneren des Ringteils (32) so ausgebildet sind, dass sie in einem vorgegebenem Winkelintervall in einer Umfangsrichtung beabstandet sind und in einer radialen Richtung nach innen vorstehen, und
wobei jeder der Halter-Zahnteile (34) zwischen den benachbarten Scheiben-Zahnteilen (16) in einer axialen Richtung hindurchtreten kann und nahe an die hintere Fläche (16a) des Scheiben-Zahnteils (16) kommt und sich damit an der gleichen Position in einer Umfangsrichtung überlappt,
**dadurch gekennzeichnet, dass**
der Scheiben-Zahnteil (16) an der gleichen Position wie die Schwalbenschwanznut (12) in einer Umfangsrichtung ausgebildet ist.

2. Gebläseflügel-Haltestruktur nach Anspruch 1, die des Weiteren umfasst:
ein Befestigungselement (40), das so eingerichtet ist, dass es den Halter-Zahnteil in einem Zustand an dem Scheiben-Zahnteil (16) befestigt, in dem der Halter-Zahnteil (34) nahe an den Scheiben-Zahnteil (16) kommt und sie einander überlappen.

## Revendications

1. Structure de maintien de pale de soufflante dans laquelle une pluralité de pales de soufflante (20) est configurée pour être fixée à une périphérie extérieure d'un disque (10) entrainé en rotation par une turbine,
- dans laquelle le disque (10) comprend une pluralité de rainures en queue d'aronde (12) configurées pour être espacées à un intervalle angulaire prédéterminé dans une direction circonférentielle et pour s'étendre dans une direction axiale,
- dans laquelle chacune des pales de soufflante (20) comprend une partie en queue d'aronde (22) configurée pour être adaptée à chacune des rainures en queue d'aronde (12) dans une direction axiale et capable de transmettre une force centrifuge produite durant une rotation du disque (10),
- dans laquelle le disque (10) comprend une partie en rebord (14) configurée pour être positionnée devant les rainures en queue d'aronde (12) et pour s'étendre vers l'extérieur dans une direction radiale,
- dans laquelle la structure de maintien de pale de soufflante comprend en outre un élément de maintien en forme d'anneau (30) configuré pour être adapté entre une surface avant (22a) de la partie en queue d'aronde (22) et une surface arrière (16a) de la partie en rebord (14) de façon à transmettre une charge axiale vers l'avant, agissant sur la pale de soufflante, au disque (10) par l'intermédiaire de la surface arrière (16a) de la partie en rebord (14),
- dans laquelle la partie en rebord (14) du disque (10) comprend des parties de dent de disque (16) configurées pour être espacées à un intervalle angulaire prédéterminé dans une direction circonférentielle et pour se projeter vers l'extérieur dans une direction radiale,
- dans laquelle l'élément de maintien (30) comprend une partie annulaire (32) configurée pour comporter une surface arrière (16a) venant au contact de la surface avant (22a) de la partie en queue d'aronde (22) et des parties de dent de maintien (34) configurées pour être formées à l'intérieur de la partie annulaire (32) de façon à être espacées à un intervalle angulaire prédéterminé dans une direction circonférentielle et à se projeter vers l'intérieur dans une direction radiale, et
- dans laquelle chacune des parties de dent de maintien (34) est capable de passer entre les parties de dent de disque (16) adjacentes dans une direction axiale et vient près de la surface arrière (16a) de la partie de dent de disque (16) pour recouvrir celle-ci à la même position dans une direction circonférentielle,
- **caractérisée en ce que** :
- la partie de dent de disque (16) est formée à la même position que celle de la rainure en queue d'aronde (12) dans une direction circonférentielle.

2. Structure de maintien de pale de soufflante selon la revendication 1, comprenant en outre :
- un dispositif de fixation (40) configuré pour fixer la partie de dent de maintien à la partie de dent de disque (16) dans un état dans lequel la partie de dent de maintien (34) vient près de la partie de dent de disque (16) pour se recouvrir l'une l'autre.
